# EUROPÄISCHE PATENTSCHRIFT

(11) **EP 1 070 688 B1**
(45) Veröffentlichungstag und Bekanntmachung des Hinweises auf die Patenterteilung: **04.08.2004**
(21) Anmeldenummer: 00106482.3
(22) Anmeldetag: 25.03.2000
(51) Int. Cl.: C04B 41/45, C09K 3/14, C09D 7/12, B44C 5/04

(54) **Oberflächenbeschichteter Hartstoff**
Surface coated hard material
Matériau dur à surface revêtue

(30) Priorität: 19.07.1999 DE 19933710
(43) Veröffentlichungstag der Anmeldung: 24.01.2001
(73) Patentinhaber: Casalini, Daniele, 28845 Domodossola (VB) (IT)
(72) Erfinder: Casalini, Daniele, 28845 Domodossola (VB) (IT)
(74) Vertreter: Patentanwälte Westphal, Mussgnug & Partner

(56) Entgegenhaltungen:
- EP-A- 0 649 887
- EP-A- 0 732 449
- WO-A-98/53921
- DE-A- 2 809 595
- DE-A- 4 308 789
- NEERGAARD L J ET AL: "Silicone-coated alumina powders by the emulsion technique" JOURNAL OF MATERIALS SCIENCE, 15 SEPT. 1996, CHAPMAN & HALL, UK, Bd. 31, Nr. 18, Seiten 4779-4783, XP002150992 ISSN: 0022-2461

## Beschreibung

Die Erfindung betrifft einen oberflächenbeschichteten Hartstoff gemäß Anspruch 1, ein Verfahren zu dessen Herstellung gemäß Anspruch 9 sowie dessen Verwendung gemäß den Ansprüchen 16 und 17.

Es ist bekannt, dass Lackschichten auf Fußbödenlaminaten, Echtholzlaminaten, Parkett, Möbeln oder auch ganz allgemein auf Holz- oder Kunststoffplatten zur Erzielung eines Verschleißschutzes mit Hartstoffen versetzt werden. Dabei werden Lacksysteme auf der Basis von Phenol-, Melamin-, Aldehyd-, Formaldehyd-, Harnstoff-, Epoxy-, Polyester und/oder Polyurethanharzen eingesetzt. Ein bevorzugtes Lacksystem sind die Melaminharze. Als Hartstoff ist aufgrund seiner Härte, Transparenz, Inertheit und Verfügbarkeit Aluminiumoxid in Form von Elektrokorund, Sinterkorund, Einkristallkorund und/oder kalzinierten oder gesinterten Tonerdeprodukten, wie z. B. plättchenförmige Tonerden, für die Erhöhung der Verschleißfestigkeit der Schichten prädestiniert.

Die EP 0 732 449 A1 beschreibt ein Verfahren zur Herstellung von abriebfesten Laminaten, wobei das bei der Herstellung eingesetzte Dekorpapier oberflächlich mit einer Mischung aus Melaminharz, Cellulose-Fasern, Korund als Hartstoff, Additiven und Wasser beschichtet und anschließend auf eine bestimmte Restfeuchte getrocknet wird. Das Dekorpapier wird auf die übliche Weise im Laminat verarbeitet. Nach dem Verpressen des Laminats und dem Aushärten des Melaminharzes liegt der Korund fest eingebunden in der Harzschicht vor, deren Abriebfestigkeit sich aufgrund der Härte des Korundes deutlich erhöht. In der DE 195 29 987 A1 wird ein Verfahren zur Herstellung hochabriebfester Lackschichten auf einem festen Trägermaterial beschrieben, wobei entweder die Oberfläche des Trägermaterials direkt mit dem verschleißhemmenden Mittel bestreut und anschließend mit einem Kunstharzlack (Acrylatharz-, Polyesterharz oder Polyurethanharzlacke) überzogen wird, oder das verschleißhemmende Mittel auf die bereits mit Lack versehene Oberfläche des Trägermaterials gestreut wird. Allgemein nimmt dabei die verschleißhemmende Wirkung des Hartstoffes mit zunehmender Korngröße und zunehmendem Füllgrad in der Lackschicht zu. Die maximal einsetzbare und gleichzeitig optimale Korngröße wird durch die Dicke der Lackschicht bestimmt. Der optimale Füllgrad entspricht jedoch nicht dem möglichen Maximum, sondern wird durch die gleichzeitige Anforderung nach möglichst hoher Transparenz für die Lackschicht begrenzt. Das anschließende Verpressen und das Aushärten des Kunstharzlakkes geschieht unter Anwendung der bekannten Technologie. Eine zusätzliche Variante, die sich besonders für Laminate anbietet, besteht darin, dass ein transparentes Overlay-Papier, in das ein entsprechender Hartstoff eingelagert wurde, mit Lack getränkt, anschließend mit der Dekorschicht verpresst und ausgehärtet wird. Als verschleißhemmendes Mittel wird bevorzugt Korund eingesetzt.

Die Herstellung von synthetischem Korund erfolgt üblicherweise im Lichtbogenofen, wobei der Ausgangsstoff Tonerde oder Bauxit bei ca. 2000 °C geschmolzen wird. Das Produkt fällt bei diesem Prozeß in großen Blöcken von mehreren Tonnen an, die nach dem Abkühlen zerkleinert und anschließend zu einer Körnung aufbereitet werden. Typische Einsatzgebiete für Korundkörnungen, die in den unterschiedlichsten Absiebungen und Korngrößen von einigen Millimetern bis zu wenigen Mikrometern angeboten werden, sind Schleifmittel und Feuerfestprodukte. Bei der Zerkleinerung des Korundes entsteht aufgrund seines Sprödbruchverhaltens eine stark zerklüftete Oberfläche mit vielen Stufenversetzungen, Mikrokanten, Rillen und Rissen. Ähnliche Kornoberflächen mit zusätzlichen Poren weisen gesinterte oder kalzinierte Tonerden auf, besonders wenn sie vorher einem Mahlprozeß unterzogen wurden. Derartige Kornoberflächen zeigen eine hohe Kapillarität in Bezug auf niedrigviskose Flüssigkeiten. Diese Korneigenschaft hat sich bei der Verarbeitung von Aluminiumoxid zu abriebfesten Schichten als nachteilig herausgestellt.

Entsprechend dem aktuellen Stand der Technik wird eine abriebfeste Lackschicht heute durch ein einschichtiges Auftragen des verschleißhemmenden Lackes, dem die Hartstoffkörnung bereits zugemischt wurde, anschließendes Trocknen und Verpressen hergestellt. Danach liegen die Hartstoffpartikel teilweise direkt an der Oberfläche der Schutzschicht, so dass beispielsweise Tinte oder andere farbige Flüssigkeiten mit hohem Kriechvermögen in die Mikrokapillaren dieser Hartstoffpartikel irreversibel eindringen und dadurch nicht mehr entfernbare Flecken auf der Laminat- oder Lackoberfläche verursachen. Versuche, diese Effekte durch den Einsatz von niedrigviskosen Lacksystemen, die die gesamte Kornoberfläche bedecken, zu vermeiden, waren erfolglos, da eine Mindestviskosität erforderlich ist, um die gewünschte Schichtstärke des Lackes zu erreichen.

Ein weiterer Nachteil dieser stark zerklüfteten und nicht vollständig mit Lack benetzbaren Oberflächen der Hartstoffkörner liegt darin, dass an den erwähnten Mikrokanten, Rissen und Stufenversetzungen das Licht diffus gestreut und damit die Transparenz der mit Aluminiumoxid gefüllten Lackschicht erniedrigt wird. Eine hohe Transparenz ist jedoch eines der wichtigsten Kriterien für diese Schichten, die häufig in Bereichen eingesetzt werden, in denen optische Effekte eine große Rolle spielen. Hinzu kommt, dass sich gerade an den Mikrokanten und Rissen leicht Luftbläschen anlagern, wodurch zusätzlich eine diffuse Lichtstreuung hervorgerufen und die Transparenz weiter erniedrigt wird.

Aufgabe der vorliegenden Erfindung ist es daher, ein Hartstoffkorn zur Verfügung zu stellen, das die beschriebenen Nachteile nicht aufweist.

Gelöst wird diese Aufgabe durch einen Hartstoff mit den Merkmalen gemäß Anspruch 1, durch ein Verfahren zu dessen Herstellung gemäß Anspruch 9 sowie dessen Verwendung gemäß den Anspruchen 16 und 17.

Vorteilhafte Ausführungsvarianten der Erfindung sind Gegenstand der Unteransprüche.

Konkret wird dies durch einen Hartstoff mit einer Härte (HV_{0.2}) von ≥ 10 Gpa, dessen Oberfläche mit einer Polysiloxanschicht versehen ist.

Die Behandlung des Hartstoffs erfolgt mit einer Polysiloxanlösung der Formel 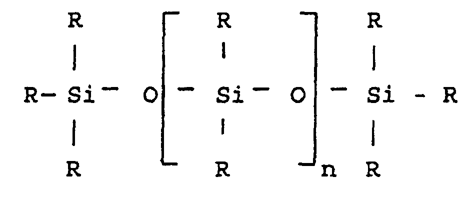 wobei der Rest R jeweils Wasserstoff, eine Alkyl- und/oder eine Phenylgruppe und n eine ganze Zahl von 1 bis 100 ist. Besonders gute Ergebnisse werden erzielt, wenn der organische Rest R eine Methylgruppe ist.

Oberflächenbehandlungen oder Beschichtungen von Hartstoffpartikeln sind seit langem bekannt und werden zu den verschiedensten Zwecken durchgeführt. So wird in der EP 0 387 748 ein hydrophob beschichtetes Schleifkorn auf Korund- und/oder Siliziumcarbidbasis beschrieben, das oberflächlich mit einem hochdispersen hydrophoben Siliziumdioxid behandelt wird, wodurch die Stärke der Einbindung des Korns in Kunstharzbindungen verbessert werden soll. Ebenfalls eine Verbesserung der Einbindung von Schleifkörnern in Kunstharzsystemen wird nach der EP 304 616 durch eine Oberflächenbehandlung mit hygroskopischen und/oder hydrophilen Substanzen erreicht. Daneben hat die Behandlung noch den zusätzlichen Effekt, daß die Streufähigkeit eines so behandelten Korns im elektrostatischen Feld verbessert wird.

Üblich sind auch keramische Ummantelungen von Körnern mit einem Binder und einem Pigment, um die Oberfläche des Korns zu vergrößern und damit wiederum die Einbindung des Korns bei der Herstellung von Schleifmitteln zu verbessern. Auch diese Ummantelung hat den Effekt, daß gleichzeitig die Streufähigkeit der Körnung verbessert wird. Mit keiner der oben genannten Behandlungen können jedoch die Nachteile des Aluminiumoxids beim Einsatz in Lackschichten oder Laminaten (hohe Kapillarität gegenüber niedrigviskosen Flüssigkeiten und diffuse Streuung des Lichtes) ausgeglichen werden.

Mischt man dagegen eine Hartstoffkörnung auf Aluminiumoxidbasis mit Polysiloxanen oder entsprechenden Emulsionen bzw. Lösungen, erreicht man aufgrund des hervorragenden Kriechvermögens der Polysiloxane eine vollständige Beschichtung der Oberfläche der einzelnen Körner, wobei die eingangs erwähnten Mikrokanten, Risse, Rillen und Stufenversetzungen bedeckt bzw. aufgefüllt sind, so dass niedrigviskose Flüssigkeiten nicht mehr in das Korn eindringen können und auch keine diffuse Lichtstreuung an Rissen oder Kanten stattfindet.

Als Hartstoff auf Aluminiumoxidbasis kommen Elektroschmelzkorund, Einkristallkorund, Sinterkorund, Tabulartonerde, kalzinierte und gesinterte Tonerdeprodukte, wie z.B. plättchenförmige Tonerden, oder auch Mischungen daraus in Frage. In der Korngröße gibt es für den einzusetzenden Hartstoff keine Einschränkungen. Je nach Bedarf und Anwendungsfall können sowohl Mikro- wie Makrokörnungen gemäß vorliegender Erfindung behandelt werden. Die Härte des Hartstoffkorns muss jedoch einen Mindestwert von 10 GPa, bevorzugt 15 GPa, aufweisen, um einen wirkungsvollen Verschleißschutz bieten zu können. Die Behandlung selber erfolgt in bekannter Weise durch Aufsprühen einer entsprechenden Polysiloxanlösung bzw. -emulsion oder Vermischen des Hartstoffes mit einer Polysiloxanlösung oder -emulsion in geeigneten Mischern (Taumelmischer, Drehmischer, Freifallmischer und/oder Intensivmischer). Als vorteilhaft hat es sich erwiesen, je nach Feuchtigkeitsgehalt der Ausgangskörnung direkt vor der Beschichtung eine Wärmebehandlung in einem Temperaturbereich zwischen 100 °C und 600 °C durchzuführen, um die Oberfläche mitsamt Poren und Rissen von anhaftender Feuchtigkeit zu befreien. Die Menge und Konzentration der Polysiloxanlösung muß so gewählt werden, dass die gesamte Oberfläche der einzelnen Körner nach der Behandlung bedeckt ist. Je feiner die zu behandelnde Körnung ist, um so mehr Polysiloxan muß eingesetzt werden. Vor allem wirtschaftliche Überlegungen sprechen dafür, eine vollständige, aber möglichst dünne Schicht aufzutragen. Die Mengen an Polysiloxan, die für eine vollständige Beschichtung benötigt werden, liegen zwischen 0,001 und 10 Gew.-%, meist zwischen 0,01 und 5 Gew.-%, bezogen auf den eingesetzten Hartstoff. Bevorzugt liegt aus den oben genannten Gründen bei der Behandlung die Menge an eingesetztem Polysiloxan zwischen 0,5 und 1,5 Gew.-%, bezogen auf den eingesetzten Hartstoff. Die optimale Menge hängt von der Korngröße bzw. der spezifischen Oberfläche des Schleifkorns ab. Die vorteilhafte Wirkung verändert sich beim Überschreiten der optimalen Menge über einen relativ großen Bereich kaum. Die Viskosität des eingesetzten Polysiloxans bzw. der entsprechenden Emulsion oder Lösung sollte den Wert von 1500 mPa*s bei Raumtemperatur nicht überschreiten, um eine optimale Wirkung der Ummantelung zu erreichen.

Zusätzlich zu den verbesserten optischen Eigenschaften der Lack- und Laminatschichten wurde überraschenderweise beim Einbau der erfindungsgemäß behandelten Hartstoffe gefunden, dass die Abriebfestigkeit dieser Schichten höher ist als die vergleichbarer Schichten, in denen unbehandelte Hartstoffkörner eingelagert sind. Die Abriebfestigkeit wurde im sogenannten Tabertest bestimmt, bei dem ein Prüfkörper unter belasteten, zylindrischen, mit definiertem Schmiergelpapier belegten Reibrädern rotiert. Die bis zu einem festgelegten Grad des Abriebes notwendige Zahl an Umdrehungen wird gemessen.

Als eine mögliche Erklärung für diesen überraschenden Effekt kann das hohe Gleit- und Schmiervermögen der Polysiloxane herangezogen werden. Die Verschleißprüfung selber ist nichts anderes als ein Schleifprozeß und der Einsatz von Schmiermitteln (z.B. Öl) beim Schleifen ist eine allgemein bekannte Technologie, um die Reibkoeffizienten zwischen Werkstoff und Schleifmittel herabzusetzen und damit die Aggressivität des Schleifmittels zu vermindern. Im vorliegenden Falle wird möglicherweise so die Wirkung des Schleifpapiers reduziert und der Abrieb der Lack- oder Laminatschicht verringert.

Im folgenden wird die Erfindung beispielhaft erläutert, ohne dass darin eine Einschränkung zu sehen ist.

### Beispiele 1 - 5

1 kg Edelkorund Weiß (Alodur® WSK, Fa. Treibacher Schleifmittel) in der Körnung F280 wurden bei 400°C getempert, anschließend in einem Taumelmischer mit einer verdünnten, wäßrigen Polysiloxan-Emulsion (Baysilone® Ölemulsion H, Fa. Bayer Leverkusen) besprüht und anschließend 20 Minuten intensiv gemischt. Das beschichtete Korn wurde dann 20 Minuten bei 120 °C in einem Umlufttrockenschrank getrocknet. Anschließend wurde jeweils der Gesamtgehalt an SiO₂ und der Anteil an Polysiloxan auf der Kornoberfläche bestimmt.

**Tabelle 1:**

| Konzentrationsreihe | | | |
|---|---|---|---|
| Bsp. | Baysilone Ölemulsion H | Gesamtgehalt an SiO₂ (Gew.-%) | Gehalt (Gew.-%) an Polydimethylsiloxan |
| 1 | 1 ml in 15 ml H2O | 0,032 | 0,025 |
| 2 | 5 ml in 15 ml H2O | 0,135 | 0,128 |
| 3 | 15 ml (unverdünnt) | 0,589 | 0,582 |
| 4 | 30 ml (unverdünnt) | 1,309 | 1,302 |
| 5 | 60 ml (unverdünnt) | 2,743 | 2,704 |
| 6* | - | 0,007 | - |

| | | | |
|---|---|---|---|
| 6* = unbehandeltes Vergleichsmaterial | | | |

Die besten Ergebnisse in dieser Versuchsreihe wurden mit Beispiel 4 erzielt. Die Charakterisierung erfolgte anhand von elektronenmiskroskopischen Aufnahmen und Messungen von Abriebwerten im Vergleich zur unbehandelten Körnung.

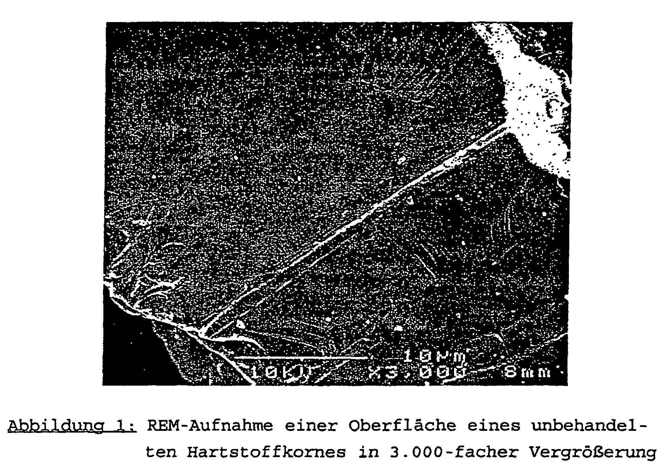

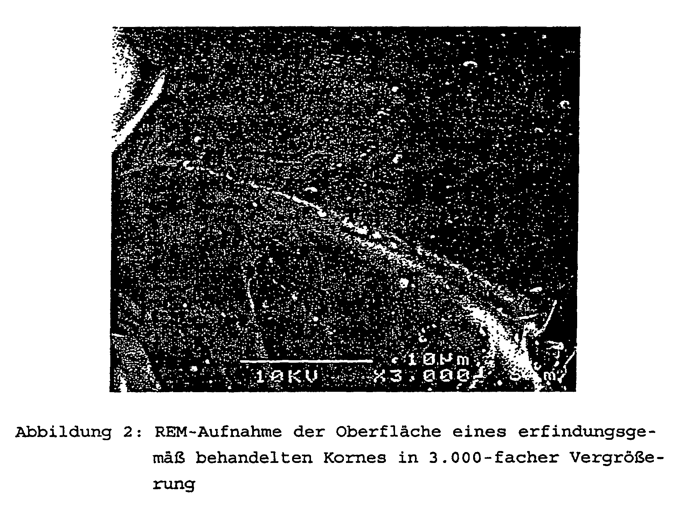

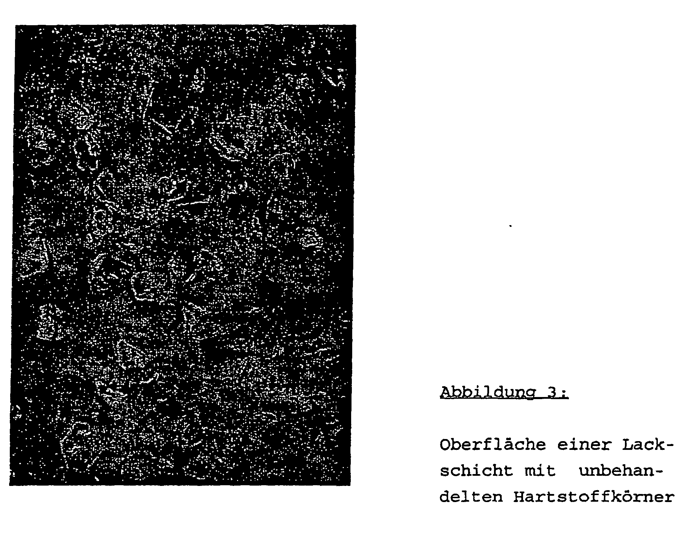

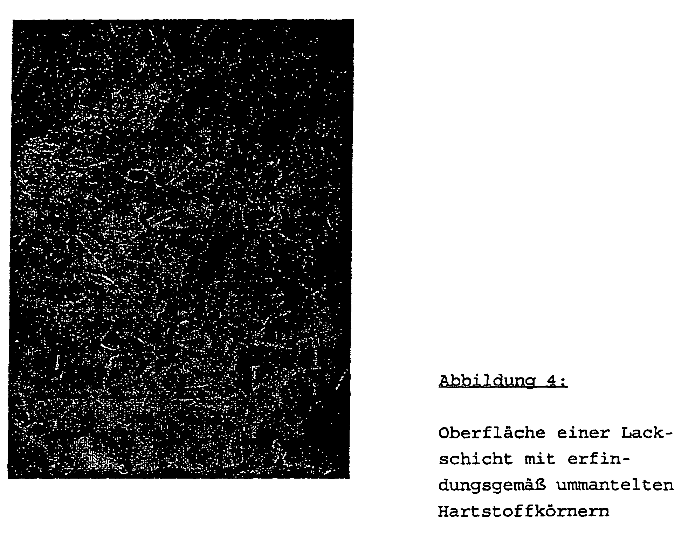

Die Abbildung 1 im Anhang zeigt das unbeschichtete Korn (Beispiel 6) mit einer sehr fein strukturierten und zerklüfteten Oberfläche. Im Vergleich dazu ist in der Abbildung 2 die Kornoberfläche (Beispiel 4) zu sehen, die durch die erfindungsgemäße Beschichtung vollständig bedeckt ist. Die Risse sind geschlossen und weitestgehend ausgefüllt. Die Kanten sind abgerundet und Stufenversetzungen sind nicht mehr zu erkennen. In den Abbildungen 3 und 4 im Anhang wird die Auswirkung der erfindungsgemäßen Beschichtung auf die Transparenz einer Lackschicht dokumentiert. Während die unbeschichteten Körner (Beispiel 6) in der Abbildung 3 deutlich sichtbar in der Lackschicht vorliegen und eine relativ hohe Zahl von intrakristallinen optischen Brechungskanten zu erkennen sind, sind die erfindungsgemäß beschichteten Hartstoffkörner in der Abbildung 4 nur noch schwach anhand der Korn-Harz-Grenzflächen zu erkennen. Intrakristalline optische Brechungskanten fehlen vollständig.

In der Tabelle 2 sind die gemäß Normentwurf prEN 13329:1998, Anhang E ermittelten IP-Abriebswerte aufgeführt.

**Tabelle 2:**

| Abriebwerte | | |
|---|---|---|
| Bsp. | IP-Mittelwert aus drei Prüfkörpern | Verschleißfestigkeit im Vergleich zum unbehandelten Korn |
| 1 | 2200 | 105 % |
| 2 | 2200 | 105 % |
| 3 | 2300 | 109 % |
| 4 | 2500 | 119 % |
| 5 | 2500 | 119 % |
| 6* | 2100 | 100 % |

Dabei zeigen die Prüfkörper, die in der Verschleißschicht das erfindungsgemäß ummantelte Hartstoffkorn (Beispiel 4) enthalten, sogar eine - im Vergleich zum Beispiel 6 - um 19 % erhöhte Abriebfestigkeit.

## Patentansprüche

1. Oberflächenbeschichtete Hartstoffkörner mit einer Härte (HV_{0.2}) ≥ 10 GPa, dessen Oberfläche eine Polysiloxanschicht der Formel 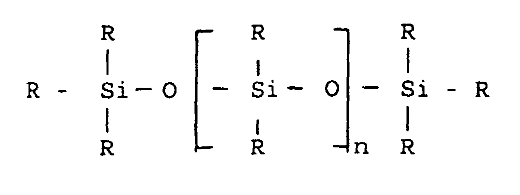 aufweist, wobei der Rest R Wasserstoff, eine Alkyl- und/oder eine Phenylgruppe ist und n eine ganze Zahl zwischen 1 und 100 ist.

2. Oberflächenbeschichtete Hartstoffkörner gemäß Anspruch 1,
**dadurch gekennzeichnet, dass** die Härte (HV_{0,2}) > 15 GPa beträgt.

3. Oberflächenbeschichtete Hartstoffkörner gemäß Anspruch 1 oder 2,
**dadurch gekennzeichnet, dass** die Basis der Hartstoffkörner Aluminiumoxid ist.

4. Oberflächenbeschichtete Hartstoffkörner gemäß Anspruch 3,
**dadurch gekennzeichnet, dass** die Basis der Hartstoffkörner aus Elektrokorund, Einkristallkorund, Sinterkorund, Sintertonerde und/oder kalzinierter Tonerde bzw. Mischungen aus diesen besteht.

5. Oberflächenbeschichtete Hartstoffkörner gemaß einem der Ansprüche 1 bis 4,
**dadurch gekennzeichnet, dass** der Rest R eine Methylgruppe ist.

6. Oberflächenbeschichtete Hartstoffkörner gemäß einem der Ansprüche 1 bis 5,
**dadurch gekennzeichnet, dass** die Menge an Polysiloxan auf seiner Oberfläche 0,001 bis 10 Gew.-%, bezogen auf die eingesetzten Hartstoffkörner, beträgt.

7. Oberflächenbeschichtete Hartstoffkörner gemäß Anspruch 6,
**dadurch gekennzeichnet, dass** die Menge an Polysiloxan 0,01 bis 5 Gew.-% beträgt.

8. Oberflächenbeschichtete Hartstoffkörner gemäß Anspruch 6,
**dadurch gekennzeichnet, dass** die Menge an Polysiloxan 0,1 bis 1,5 Gew.-% beträgt.

9. Verfahren zur Herstellung von Hartstoffkörnern gemäß einem der Ansprüche 1 bis 8,
**dadurch gekennzeichnet, dass** eine Hartstoffkörnung mit einem Polysiloxan, einer Polysiloxan-Emulsion oder einer verdünnten Polysiloxan-Emulsion vermischt wird.

10. Verfahren gemäß Anspruch 9,
**dadurch gekennzeichnet, dass** die Hartstoffkörnung direkt vor dem Mischvorgang einer Wärmebehandlung in einem Temperaturbereich zwischen 100 °C und 600 °C unterzogen wird.

11. Verfahren gemäß Anspruch 9 oder 10,
**dadurch gekennzeichnet, dass** die Hartstoffkörnung nach dem Beschichten mit Polysiloxan in einem Temperaturbereich zwischen 100 °C und 400°C getrocknet wird.

12. Verfahren gemäß Anspruch 11,
**dadurch gekennzeichnet, dass** die Trocknungstemperatur zwischen 100 °C und 200 °C liegt.

13. Verfahren gemäß einem der Ansprüche 9 bis 12,
**dadurch gekennzeichnet, dass** eine wässrige Polysiloxan-Emulsion eingesetzt wird.

14. Verfahren gemäß einem der Ansprüche 9 bis 13,
**dadurch gekennzeichnet, dass** die Viskosität des eingesetzten Polysiloxans, der Polysiloxan-Emulsion oder der verdünnten Polysiloxan-Emulsion unter 1500 mPa*s liegt.

15. Verfahren gemäß Anspruch 14,
**dadurch gekennzeichnet, dass** die Viskosität des eingesetzten Polysiloxans, der Polysiloxan-Emulsion oder verdünnten Polysiloxan-Emulsion unter 1000 mPa*s liegt.

16. Verwendung von Hartstoffkörnern gemäß einem der Ansprüche 1 bis 8 als verschleißhemmendes Mittel in Lackschichten auf Basis von Phenol-, Melamin-, Aldehyd-, Harnstoff-, Formaldehyd-, Epoxy-, Polyester- und/oder Polyurethanharzen.

17. Verwendung von Hartstoffkörnern gemäß einem der Ansprüche 1 bis 8 als verschleißhemmendes Mittel in transparenten Overlay-Papieren zur Herstellung von verschleißfesten Lackschichten.

## Claims

1. Surface-coated grains of hard material having a hardness (HV_{0.2}) ≥ 10 GPa, the surface of which comprises a polysiloxane layer having the formula 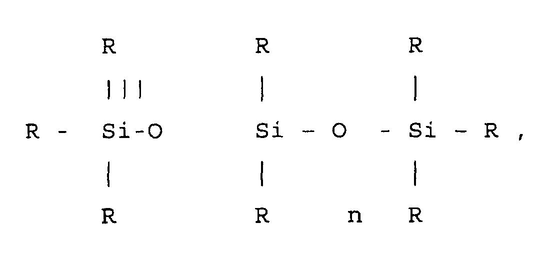 the radical R being hydrogen, an alkyl and/or a phenyl group and n being a whole number between 1 and 100.

2. Surface-coated grains of hard material according to Claim 1,
**characterised in that** the hardness (HV_{0.2}) is > 15 GPa.

3. Surface-coated grains of hard material according to Claim 1 or 2,
**characterised in that** the base of the grains of hard material is aluminium oxide.

4. Surface-coated grains of hard material according to Claim 3,
**characterised in that** the base of the grains of hard material are made from aluminium oxide abrasive, monocrystal corundum, sintered corundum, sintered oxide of aluminium and/or calcined oxide of aluminium or mixtures thereof.

5. Surface-coated grains of hard material according to one of Claims 1 to 4,
**characterised in that** the radical R is a methyl group.

6. Surface-coated grains of hard material according to one of Claims 1 to 5,
**characterised in that** the amount of polysiloxane on its surface is 0.001 to 10 % by weight, related to the grains of hard material used.

7. Surface-coated grains of hard material according to Claim 6,
**characterised in that** the amount of polysiloxane is 0.01 to 5 % by weight.

8. Surface-coated grains of hard material according to Claim 6,
**characterised in that** the amount of polysiloxane is 0.1 to 1.5 % by weight.

9. A method for the manufacture of grains of hard material in accordance with one of Claims 1 to 8,
**characterised in that** a hard material granulation is mixed with a polysiloxane, a polysiloxane emulsion or a diluted polysiloxane emulsion.

10. A method according to Claim 9,
**characterised in that** directly before the mixing operation the hard material granulation is subjected to a heat treatment in a temperature range of between 100°C and 600°C.

11. A method according to Claim 10 or 11,
**characterised in that** after being coated with polysiloxane the hard material granulation is dried in a temperature range of between 100°C and 400°C.

12. A method according to Claim 11,
**characterised in that** the drying temperature is between 100°C and 200°C.

13. A method according to one of Claims 9 to 12,
**characterised in that** an aqueous polysiloxane emulsion is used.

14. A method according to one of Claims 9 to 13,
**characterised in that** the viscosity of the used polysiloxane, the polysiloxane emulsion or the diluted polysiloxane emulsion lies beneath 1500 mPa*s.

15. A method according to Claim 14,
**characterised in that** the viscosity of the used polysiloxane, of the polysiloxane emulsion or diluted polysiloxane emulsion lies beneath 1000 mPa*s.

16. Use of grains of hard material according to one of Claims 1 to 8 as a friction-reducing medium in coats of lacquer on a base of phenol, melamine, aldehyde, urea, formaldehyde, epoxy, polyester and/or polyurethane resins.

17. Use of grains of hard material according to one of Claims 1 to 8 as a friction-reducing medium in transparent overlay papers for the manufacture of long-wearing coats of lacquer.

## Revendications

1. Matériau granulaire dur à surface revêtue de dureté (HV_{0,2}) ≥ 10 GPa, dont la surface présente une couche de polysiloxane répondant à la formule 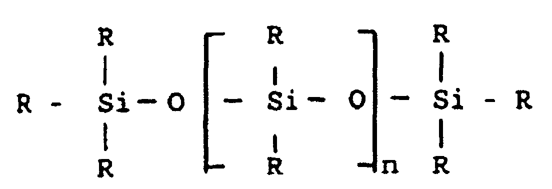 dans laquelle le reste R représente un atome d'hydrogène, un groupe alkyle et/ou phényle et n représente un nombre entier compris entre 1 et 100.

2. Matériau granulaire dur à surface revêtue selon la revendication 1,
**caractérisé en ce que**
la dureté (HV_{0.2}) est supérieure à 15 GPa.

3. Matériau granulaire dur à surface revêtue selon la revendication 1 ou 2,
**caractérisé en ce que**
la base du matériau granulaire dur est l'oxyde d'aluminium.

4. Matériau granulaire dur à surface revêtue selon la revendication 3,
**caractérisé en ce que**
la base du matériau granulaire dur consiste en du corindon électrique, du corindon monocristallin, du corindon fritté, de l'alumine frittée et/ou de l'alumine calcinée ou bien des mélanges de ces matériaux.

5. Matériau granulaire dur à surface revêtue selon l'une des revendications 1 à 4,
**caractérisé en ce que**
le reste R représente un groupe méthyle.

6. Matériau granulaire dur à surface revêtue selon l'une des revendications 1 à 5,
**caractérisé en ce que**
sa surface comporte une quantité de polysiloxane comprise entre 0,001 et 10 % en poids par rapport au matériau granulaire dur mis en oeuvre.

7. Matériau granulaire dur à surface revêtue selon la revendication 6,
**caractérisé en ce que**
la quantité de polysiloxane est comprise entre 0,01 et 5 % en poids.

8. Matériau granulaire dur à surface revêtue selon la revendication 6,
**caractérisé en ce que**
la quantité de polysiloxane est comprise entre 0,1 et 1,5 % en poids.

9. Procédé de production d'un matériau granulaire dur selon l'une des revendications 1 à 8,
**caractérisé en ce qu'**
un granulat de matériau dur est mélangé à un polysiloxane, une émulsion de polysiloxane ou une émulsion de polysiloxane diluée.

10. Procédé selon la revendication 9,
**caractérisé en ce que**
le granulat de matériau dur est soumis à un traitement thermique à une température comprise entre 100°C et 600°C directement avant l'opération de mélange.

11. Procédé selon l'une des revendications 9 ou 10,
**caractérisé en ce que**
le granulat de matériau dur est séché à une température comprise entre 100°C et 400°C après avoir été revêtu de polysiloxane.

12. Procédé selon la revendication 11,
**caractérisé en ce que**
la température de séchage est comprise entre 100°C et 200°C.

13. Procédé selon l'une des revendications 9 à 12,
**caractérisé en ce qu'**
on utilise une émulsion de polysiloxane aqueuse.

14. Procédé selon l'une des revendications 9 à 13,
**caractérisé en ce que**
la viscosité du polysiloxane, de l'émulsion de polysiloxane ou de l'émulsion de polysiloxane diluée utilisés est inférieure à 1500 mPa*s.

15. Procédé selon la revendication 14,
**caractérisé en ce que**
la viscosité du polysiloxane, de l'émulsion de polysiloxane ou de l'émulsion de polysiloxane diluée utilisés est inférieure à 1000 mPa*s.

16. Utilisation de matériau granulaire dur selon l'une des revendications 1 à 8 en tant qu'agent retardant l'usure dans des couches de vernis à base de résines de phénol, de résines de mélamine, de résines d'aldéhyde, de résines d'urée, de résines de formaldéhyde, de résines époxydes, de résines de polyester et/ou de résines de polyuréthane.

17. Utilisation de matériau granulaire dur selon l'une des revendications 1 à 8 en tant qu'agent retardant l'usure dans des papiers mélaminés transparents pour la fabrication de couches de vernis résistantes à l'usure.
